# EUROPÄISCHE PATENTSCHRIFT

(11) **EP 1 298 333 B1**
(45) Veröffentlichungstag und Bekanntmachung des Hinweises auf die Patenterteilung: **26.07.2006**
(21) Anmeldenummer: 02021840.0
(22) Anmeldetag: 27.09.2002
(51) Int. Cl.: F16B 39/286, F16B 41/00

(54) **Kraftschlüssig selbstsichernde Mutter für eine Schraubverbindung**
Self-locking rigidly coupling nut for a screwed joint
Ecrou auto-blocage accouplant rigidement pour un assemblage vissé

(30) Priorität: 01.10.2001 DE 10148473
(43) Veröffentlichungstag der Anmeldung: 02.04.2003
(73) Patentinhaber: KNORR-BREMSE Systeme für Schienenfahrzeuge GmbH, 80809 München (DE)
(72) Erfinder: Schörwerth, Mathias, 82538 Geretsried (DE); Wirth, Xaver, 85737 Ismaning (DE); Schrade, Ulrich, 89518 Heidenheim (DE)
(74) Vertreter: Mattusch, Gundula

(56) Entgegenhaltungen:
- BE-A- 461 106
- DE-A- 1 400 202
- FR-A- 2 675 552
- GB-A- 738 374

## Beschreibung

Die vorliegende Erfindung betrifft eine kraftschlüssig selbstsichernde Mutter für eine Schraubverbindung, insbesondere zur Befestigung einer Bremsscheibe an einem Schienenrad.

Aus der DE 1 400 202 A geht eine gattungsgemäße selbstsichernde Mutter für eine Schraubverbindung hervor, welche entlang der Längserstreckung aufgrund eines durchgehenden Sechskants einen Schlüsselabschnitt aufweist. Für die Selbstsicherung sind radiale Schlitze zur Ausbildung von Bögen vorgesehen, welche in einer Art deformiert sind, bei der die äußere Hüllform der Mutter nicht erhalten bleibt. Durch die Änderung der äußeren Hüllform der Mutter kann ein funktionsgerechtes Zusammenwirken mit einem Schraubenschlüssel oder dergleichen nicht unter allen Umständen sichergestellt werden. Insbesondere erweist sich eine derartige Mutter aus sicherheitstechnischen Gründen zum Einsatz im Bereich der Bremstechnik für ungeeignet. Denn hier können nur Bauteile mit geringen Maßtoleranzen zum Einsatz gebracht werden. Ebenfalls nachteilig im Hinblick auf sicherheitstechnische Aspekte ist die Tatsache, dass bei der bekannten selbstsichernden Mutter nur wenige Gewindegänge der Schraubverbindung wirksam tragen können. Denn die Schlitze sind bei diesem Stand der Technik stets in Bereichen eingebracht, welche den Gebrauchswert durch die zusätzliche Selbstsicherungsfunktion verschlechtert.

Schraubverbindungen werden auf den meisten Gebieten der Technik verwendet, um eine lösbare Verbindung zwischen mindestens zwei zu verbindenden Bauteilen herzustellen. Dabei weist mindestens eines der Bauteile eine Durchgangsbohrung für ein Schraubenelement auf. Auf das Schraubenelement ist eine korrespondierende Mutter aufschraubbar. In vielen Einsatzfällen ist zur Aufnahme der Mutter eine zylindrische Senkung koaxial zur Durchgangsbohrung in das zu verbindende eingebracht. Die Senkung gewährleistet, dass die Mutter nicht über die Oberfläche des Bauteils hervorsteht.

Insbesondere auf dem Gebiet des Schienenfahrzeugbaus werden beispielsweise Bremsscheiben beidseits eines Schienenrades als Trägerelement mit einer derartigen Schraubverbindung lösbar befestigt. Hierzu sind an der Seitenfläche des Schienenrades in gleichen radialen Abständen zu der Radachse mehrere, entlang einer Umfangslinie äquidistant abgeordnete Durchgangsbohrungen vorgesehen, die mit Durchgangsbohrungen in den beiden ringförmigen Radbremsscheiben in eine fluchtende Übereinstimmung bringbar sind, so dass hierüber eine Schraubverbindung zwischen den drei zu verbindenden Bauteilen herstellbar ist. Durch diese lösbare Befestigung am Schienenrad ist im Wartungsfall ein leichter Austausch verschlissener Radbremsscheiben möglich.

Damit Teile der Schraubverbindung - wie Schraubenkopf oder Mutter - nicht mit den Bremsbelägen in Kontakt kommen, sind diese innerhalb zylindrischer Senkungen beidseits der Durchgangsbohrung vollständig untergebracht. Auf diese Weise wird eine Beschädigung der Bremsbeläge oder der Verschraubungsteile vermieden. Um eine maximale Reibfläche an der Radbremsscheibe zu erzielen und die Bruchfestigkeit der Bremsscheiben nicht zu beeinträchtigen, sind die Schraubenelemente sowie die zugeordneten Senkungen der Durchgangsbohrungen mit möglichst geringem Durchmesser auszuführen. Andererseits darf ein Mindestdurchmesser für die Schraubenelemente nicht überschritten werden, um die erforderliche Sicherheit der Schraubverbindung zu gewährleisten.

Trotz derartig beengter Platzverhältnisse ist es sinnvoll, die Schraubverbindung mit Mitteln gegen ein ungewolltes Lösen oder gegen Verlieren auszustatten.

Aus dem "Taschenbuch für den Maschinenbau" (DUBBEL, 16. Auflage, Abschnitt G39, Kapitel 1.7.8 f) gehen verschiedene Arten von Mitteln zum Sichern einer Schraubverbindung hervor. Sicherungsmittel für Muttern lassen sich grundsätzlich in formschlüssig und kraftschlüssig wirkende Sicherungen unterteilen. Formschlüssige Sicherungen verhindern zuverlässig eine relative Bewegung der Mutter zum Schraubenelement. So sind Sicherungsbleche mit mindestens einer Innen- oder Außennase oder Splinte bekannt, die nach Anziehen der Mutter durch Umbiegen eine formschlüssige Verbindung zwischen der Mutter und dem Schraubenelement herstellen.

Im eingangs beschriebenen Anwendungsfall ist ein derartiges Sicherungsblech oder ein Splint allerdings wegen der beengten Platzverhältnisse innerhalb der Senkung schlecht einsetzbar.

Hierfür eignen sich kraftschlüssige Sicherungen besser. Zur Klasse der kraftschlüssigen Sicherungen zählen z.B. selbstsichernde Muttern. Bei kraftschlüssig selbstsichernden Muttern wird ein hoher Kraftschluss zwischen dem Gewinde der Mutter und dem des Schraubenelements auf Grund von Reibung erzeugt, so dass ein selbsttätiges Lösen der Mutter erschwert ist. Dieses kann beispielsweise durch eine elastische Einlage aus Kunststoff oder durch eine Verengung von Gewindegängen der Mutter oder auf andere Weise bewirkt werden. Oftmals sind selbstsichernde Muttern jedoch relativ aufwendig in der Herstellung.

Es ist daher die Aufgabe der vorliegenden Erfindung, eine kraftschlüssig selbstsichernde Mutter für eine Schraubverbindung zu schaffen, die einfach herstellbar ist und eine zuverlässige Sicherung der Schraubverbindung, insbesondere innerhalb einer Senkung, gewährleistet.

Die Aufgabe wird ausgehend aus einer kraftschlüssig selbstsichernden Mutter gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die selbstsichernde Mutter mindestens einen durch zwei benachbarte im Wesentlichen parallele Schlitze gebildeten Klemmbogen aufweist, der radial im Bereich des Gewindes der Mutter angeordnet ist, um durch eine plastische Deformation der innenradial dem Klemmbogen zugeordneten Gewindegangabschnitte gegenüber den übrigen Gewindegangabschnitten der Mutter bei Aufschrauben auf ein korrespondierendes Schraubelement eine kraftschlüssige Schraubensicherung zu bilden.

Die Erfindung bietet den Vorteil, dass zum Sichern der Schraubverbindung keine über die äußeren geometrischen Grundabmessungen der Schraube hervorstehenden oder diese verändernden Abschnitte oder separate Bauteile erforderlich sind. Damit bleibt die Außenform der Mutter völlig erhalten; der die Schraubensicherung bildende Klemmbogen ist in einfacher Weise nachträglich an einer Mutter anbringbar. Weiterhin bedarf die erfindungsgemäße Lösung keiner konstrukiven Änderungen an einem einer zylindrische Senkung zur Aufnahme der Mutter aufweisenden Bauteil. Bei Aufschrauben der Mutter erfolgt die Schraubensicherung aufgrund der Federwirkung des Klemmbogens, der durch das Gewinde des Schraubenelements federnd in seine Ausgangslage gedrückt wird. Die Tiefe der den Klemmbogen bildenden benachbarten radialen Schlitze ist so zu bemessen, dass der Restquerschnitt der Mutter in diesem Bereich noch ausreicht, um die erforderliche Festigkeit der Schraubverbindung sicherzustellen. Die erfindungsgemäße Schraubensicherung behindert weiterhin nicht ein werkzeugunterstütztes Lösen der Schraubverbindung, da der formmschlüssige Eingriff eines Werkzeugs hierdurch nicht behindert wird.

Vorzugsweise besteht die Mutter aus einem Gewindebuchsenabschitt mit Innengewinde, dem sich koaxial ein mit einem Werkzeug zum Drehen der Mutter formschlüssig zusammenwirkender Schlüsselabschnitt anschließt. Diese Art von Spezialmutter lässt sich in vorteilhafter Weise platzsparend innerhalb einer Senkung unterbringen. Eine besonders zuverlässige Schraubensicherung bei gleichzeitig optimaler Aufschraubbarkeit der Mutter auf ein korrespondierendes Schraubenelement lässt sich dadurch erzielen, dass der mindestens eine Klemmbogen in dem dem Schlüsselabschnitt zugewandten Endbereich des Gewindebuchsenabschnitts angeordnet ist. Damit liegt der Klemmbogen im wesentlichen zwischen dem Gewindebuchsenabschnitt und dem sich hieran koaxial anschließenden Schlüsselabschnitt. Der Schlüsselabschnitt kann nach Art eines Außen- oder Innensechskants ausgebildet sein. Insbesondere zur Unterbringung der Mutter innerhalb einer Senkung eignet sich jedoch ein Innensechskant, der in herkömmlicher Weise mit einem Inbus-Schlüssel als Werkzeug zum Anziehen oder Lösen der Mutter zusammenwirkt.

Gemäß einer weiteren die Erfindung verbessernden Maßnahme erfolgt die plastische Deformation des Klemmbogens der Mutter in radialer Richtung durch Stauchen. Der Klemmbogen kann dabei einerseits als geschlossener Bogen ausgebildet sein, wobei das Stauchen vorzugsweise durch im Wesentlichen mittige radiale Krafteinwirkung auf den geschlossenen Bogen erfolgt; andererseits kann der Klemmbogen auch als offener Bogen ausgebildet sein, wobei in diesem Falle das Stauchen vorzugsweise durch eine radiale Krafteinwirkung auf den Endbereich des offenen Bogens erfolgt. Die durch das radiale Stauchen erzeugte plastische Deformation des Klemmbogens hat in dem Maße zu erfolgen, dass ein Aufschrauben der Mutter auf das korrespondierende Schraubenelement noch möglich ist; andererseits muss die Stauchung auch größer sein als die zwischen dem Gewinde des Schraubenelements und dem Gewinde der Mutter bestehende Spielpassung, um überhaupt eine Sicherungswirkung zu erzielen.

Alternativ zu der vorstehend geschriebenen Variante kann die plastische Deformation des Klemmbogens auch in axialer Richtung durch Biegen erfolgen. Ist der Klemmbogen als geschlossener Bogen ausgebildet, so kann eine plastische Deformation in optimaler Weise durch im Wesentlichen mittige axiale Krafteinwirkung auf den geschlossenen Bogen erzeugt werden. Ist der Klemmbogen dagegen offen ausgebildet, so ist die plastische Deformation vorzugsweise durch eine axiale Krafteinwirkung auf den Endbereich des offenen Bogens möglich. Falls der Klemmbogen aus zwei benachbarten offenen Teilbögen besteht, so kann eine besonders zuverlässige kraftschlüssige Schraubensicherung dadurch erzielt werden, dass die Teilbögen wechselseitig gebogen sind.

Die vorstehend allgemein beschriebene kraftschlüssig selbstsichernde Mutter wird vorzugsweise durch ein Verfahren hergestellt, bei dem der mindestens eine Klemmbogen durch Sägen zweier benachbarter Schlitze erzeugt wird. Daraufhin kann dann das axiale oder radiale Biegen bzw. Stauchen des Klemmbogens erfolgen, um die plastische Deformation zu schaffen. Falls ein offener Bogen erzeugt werden soll, so lässt sich dieser in einfacher Weise dadurch herstellen, dass vor dem Sägen der Schlitze eine radiale Durchgangsbohrung beidseitig oder mittig im Bereich des geschlossenen Bogens angebracht wird. Alternativ hierzu kann der offene Bogen auch durch Stanzen oder dergleichen hergestellt werden.

Weitere die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: einen Querschnitt durch einen Teil eines Schienenrades, an dem beidseits Radbremsscheiben über die erfindungsgemäße Schraubverbindung lösbar befestigt sind,
- Fig. 2a: eine Seitenansicht einer selbstsichernden Mutter gemäß eines ersten Ausführungsbeispiels,
- Fig. 2b: eine Draufsicht auf die Mutter nach Figur 2a,
- Fig. 2c: einen Querschnitt durch die Mutter gemäß Figur 2a im Bereich des Klemmbogens,
- Fig. 3a: eine Seitenansicht einer kraftschlüssig selbstsichernden Mutter gemäß eines zweiten Ausführungsbeispiels,
- Fig. 3b: eine Draufsicht auf die Mutter nach Figur 2a,
- Fig. 3c: einen Querschnitt durch die Mutter nach Figur 3a im Bereich des Klemmbogens,
- Fig. 4a: eine Seitenansicht einer kraftschlüssig selbstsichernden Mutter gemäß eines dritten Ausführungsbeispiels,
- Fig. 4b: eine Draufsicht auf die Mutter nach Figur 4a,
- Fig. 4c: eine andere Seitenansicht der Mutter nach Figur 4a,
- Fig. 5a: eine Seitenansicht einer kraftschlüssigen selbstsichernden Mutter gemäß eines vierten Ausführungsbeispiels,
- Fig. 5b: eine Draufsicht auf die Mutter nach Figur 5a, und
- Fig. 5c: eine andere Seitenansicht der Mutter nach Figur 5a.

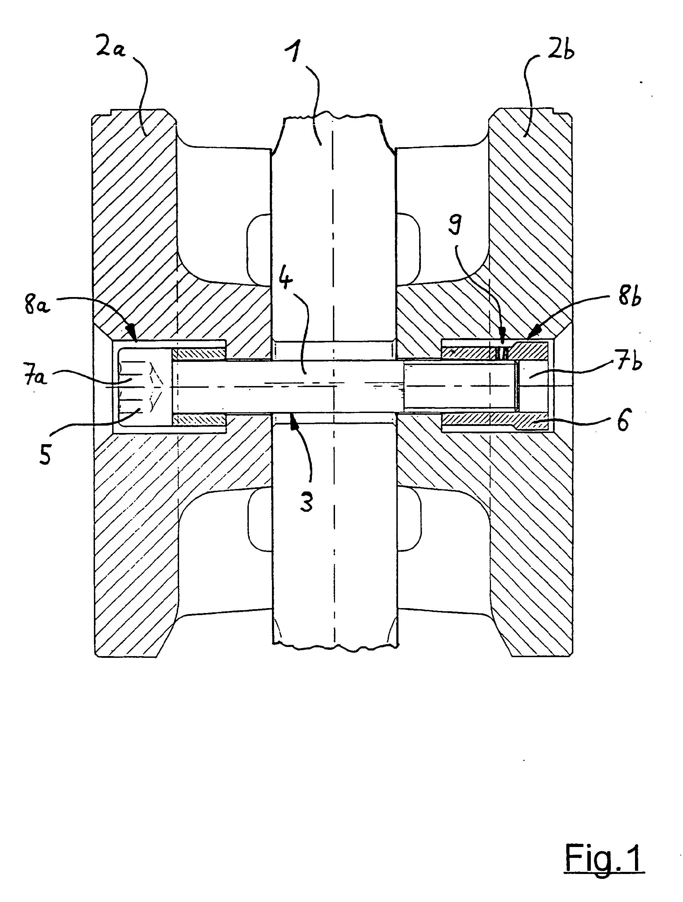

Gemäß Figur 1 sind beidseits eines Schienenrades 1 zwei Radbremsscheiben 2 a und 2 b befestigt. Durch das Schienenrad 1 sowie die Radbremsscheiben 2 a und 2b verläuft eine Durchgangsbohrung 3, durch die sich ein Schraubenelement 4 in Form einer Innensechskantschraube mit zylindrischem Schraubenkopf 5 erstreckt. Das Schraubenelement 4 ist an dem dem Schraubenkopf 5 gegenüberliegenden Ende mit einer selbstsichernden Mutter 6 versehen. Eine stirnflächenseitige Ausnehmung 7a am Schraubenkopf 5 dient dem formschlüssigen Eingriff eines nicht weiter dargestellten Werkzeuges zum Anziehen und Lösen der Schraubverbindung; eine korrespondierende Ausnehmung 7b ist stirnflächenseitig ebenfalls seitens der selbstsichernden Mutter 6 vorgesehen. Die Durchgangsbohrung 3 ist jeweils endseitig mit einer zylindrischen Senkung 8a an der Radbremsscheibe 2a sowie einer zylindrischen Senkung 8b an der Radbremsscheibe 2b versehen, um den Schraubenkopf 5 bzw. die Mutter 6 aufzunehmen. Zur kraftschlüssig wirkenden Sicherung der Mutter 6 weist diese einen radial verlaufenden Klemmbogen 9 auf.

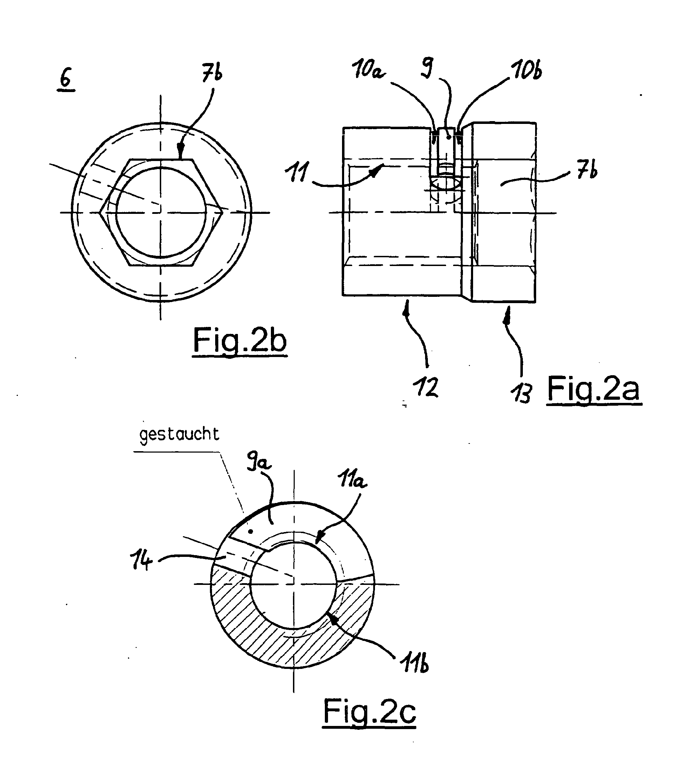

Gemäß Figur 2 wird der Klemmbogen 9 der Mutter 6 durch zwei benachbarte parallele Schlitze 10a, 10b gebildet. Der Klemmbogen 9 ist radial im Bereich des Gewindes 11 der Mutter 6 angeordnet. Die Mutter 6 besteht im Wesentlichen aus einem Gewindebuchsenabschnitt 12 mit dem Gewinde 11, dem sich koaxial ein Schlüsselabschnitt 13 anschließt. Der Schlüsselabschnitt 13 ist mit der Ausnehmung 7b versehen, die gemäß Figur 2b als Innensechskant geformt ist. Über die innensechskantförmige Ausnehmung 7b kann die Mutter 6 mittels eines Inbus-Schlüssels als Werkzeug angezogen oder gelöst werden. Nach Figur 2c ist der im Bereich des Gewindes 11 der Mutter angeordnete Klemmbogen 9 in radialer Richtung gestaucht. Die Stauchung erzeugt eine plastische Deformation des innenradial dem Klemmbogen 9 zugeordneten Gewindegangabschnittes 11 a gegenüber dem übrigen Gewindegangabschnitt 11 b der Mutter 6, welche eine kraftschlüssige Schraubensicherung beim Aufschrauben der Mutter 6 auf ein korrespondiertendes - hier nicht dargeselltes - Schraubenelement gewährleistet. In diesem Ausführungsbeispiel ist der Klemmbogen 9 als offener Bogen 9a ausgebildet, wobei das Stauchen durch eine radiale Krafteinwirkung auf den Endbereich des offenen Bogens 9a erfolgt. Der offene Bogen 9a wird durch Einbringen einer Durchgangsbohrung 14 endseitig im Bereich des vormals geschlossenen Bogens angebrachte hergestellt.

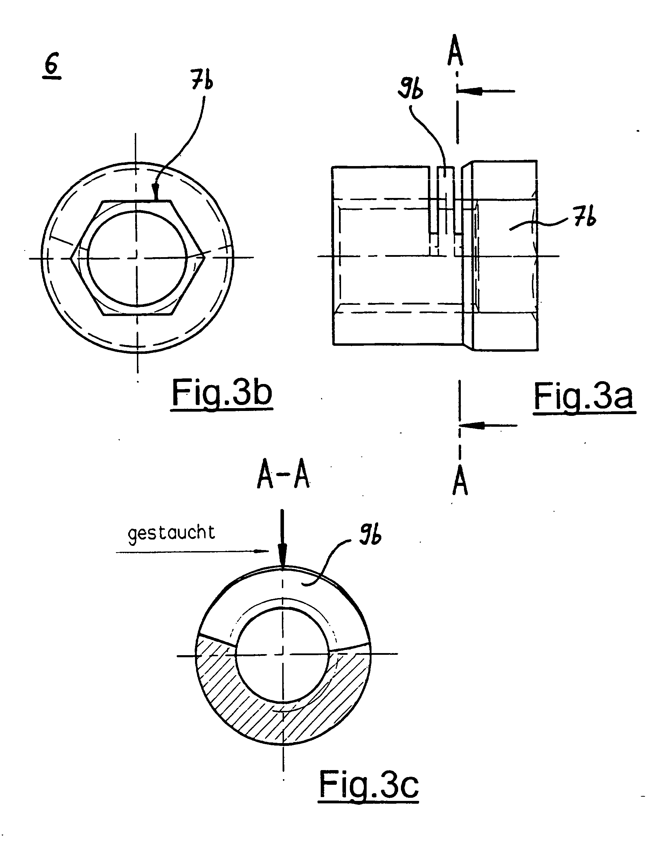

Gemäß dem Ausführungsbeispiel nach Figur 3a ist der Klemmbogen der Mutter 6 als geschlossener Bogen 9b ausgebildet. Auch dieser Mutter 6 verfügt über eine Ausnehmung 7b, die gemäß Figur 3b innensechskantförmig ausgebildet ist, um ein Anziehen oder Lösen der Mutter 6 mittels eines - hier nicht dargestellten - Werkzeuges zu ermöglichen. Ansonsten entspricht die Mutter 6 gemäß dieses Ausführungsbeispiels dem vorstehend erläuterten Ausführungsbeispiel. Der geschlossene Bogen 9b der Mutter 6 ist gemäß Figur 3c durch mittige radiale Krafteinwirkung gestaucht, um bei Aufschrauben der Mutter 6 auf ein - hier nicht weiter dargestelltes Schraubenelement- eine kraftschlüssige Schraubensicherung zu bilden.

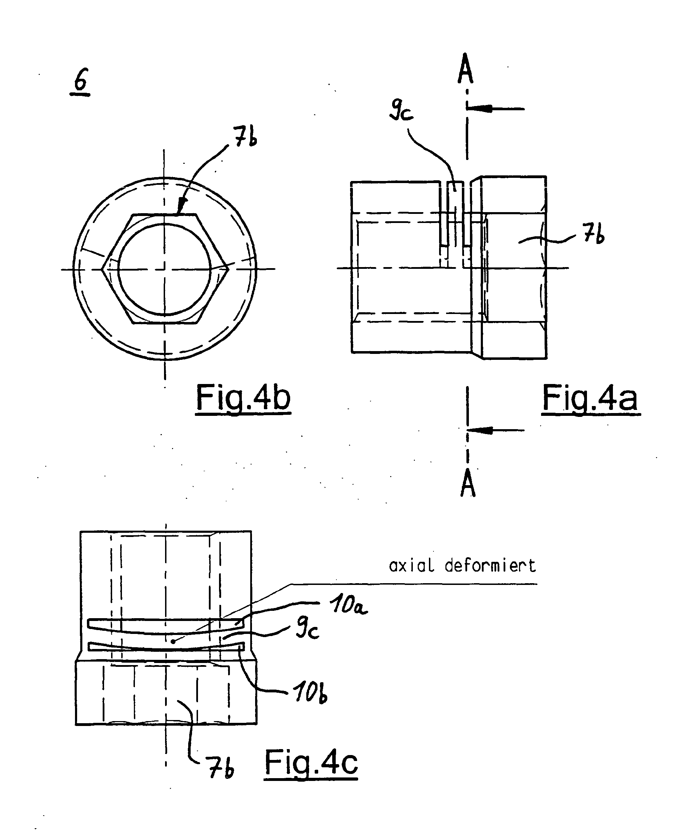

Unter Bezugnahme auf das weitere Ausführungsbeispiel nach Figur 4a erfolgt die plastische Deformation des hier vorhandenen Klemmbogens 9c durch Biegen in axialer Richtung. Der Klemmbogen ist hier als geschlossener Bogen 9c ausgebildet. Ein Anziehen und Lösen der Mutter 6 erfolgt nach Figur 4b über die innensechskantförmig ausgebildete Ausnehmung 7b. Gemäß Figur 4c ist der geschlossene Klemmbogen 9c durch im Wesentlichen mittige axiale Krafteinwirkung in Richtung der Ausnehmung 7b plastisch deformiert, so dass der Schlitz 10b gegenüber dem Schlitz 10a verengt ist.

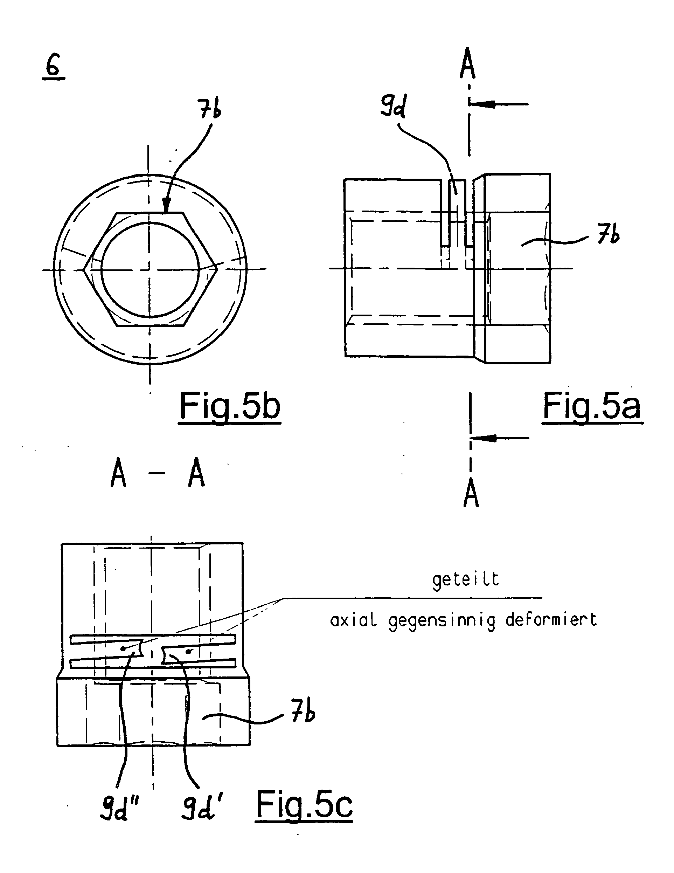

Gemäß des letzten Ausführungsbeispiels nach Figur 5a ist hier ein Klemmbogen 9d vorgesehen, der axial deformiert ist. Die Mutter 6 weist gemäß Figur 5b hier ebenfalls eine innensechskantförmige Ausnehmung 7b zum Eingriff eines geeigneten Werkzeuges auf. Unter Bezugnahme auf die Figur 5c ist der axial deformierte Bogen 9d zweigeteilt aufgebaut. Ein rechtsseitiger Teilbogen 9d ist gegensinnig gegenüber einem linksseitigen Teilbogen 9d axial deformiert, was eine besonders große Klemmwirkung zum Sichern einer Schraubverbindung gewährleistet.

Die vorliegende Erfindung ist nicht beschränkt auf die vorstehend beschriebenen bevorzugten Ausführungsbeispiele. Es sind vielmehr auch Abwandlungen hiervon denkbar, die vom Schutzbereich der nachstehend aufgeführten Ansprüche gedeckt sind.

Insbesondere ist es denkbar, mehr als einen Klemmbogen im Bereich des Gewindes der Mutter vorzusehen, um die Klemmwirkung zu steigern. Allerdings sollte bezüglich desselben Querschnittes nicht mehr als ein Klemmbogen angebracht werden, um die Festigkeit der Mutter infolge eines hierdurch nur geringen resultierenden Querschnittes nicht zu gefährden. Das mit der erfindungsgemäß ausgebildeten kraftschlüssig selbstsichernden Mutter zusammenwirkende Schraubenelement kann beispielsweise nach Art einer herkömmlichen Imbus-Schraube oder als Gewindebolzen oder dergleichen ausgebildet sein.

### Bezugszeichenliste

- **1**: Schienenrad
- **2**: Radbremsscheibe
- **3**: Durchgangsbohrung
- **4**: Schraubenelement
- **5**: Schraubenkopf
- **6**: Mutter
- 7: Ausnehmung
- **8**: Senkung
- **9**: Klemmbogen
- 10: Schlitz
- **11**: Gewinde
- **12**: Gewindebuchsenabschnitt
- **13**: Schlüsselabschnitt
- **14**: Durchgangsbohrung

## Patentansprüche

1. Kraftschlüssig selbstsichernde Mutter für eine Schraubverbindung, insbesondere zur Befestigung einer Bremsscheibe an einem Schienenrad, die mindestens einen durch zwei benachbarte im Wesentlichen parallele Schlitze (10a, 10b) gebildeten Klemmbogen (9) aufweist, der radial im Bereich des Gewindes (11) der Mutter (6) angeordnet ist,
**dadurch gekennzeichnet, dass** die Mutter (6) aus einem Gewindebuchsenabschnitt (12) mit dem Gewinde (11) besteht, dem sich koaxial ein mit einem Werkzeug zum Drehen der Mutter (6) formschlüssig zusammenwirkender Schlüsselabschnitt (13) anschließt, wobei der mindestens eine Klemmbogen (9) in dem Schlüsselabschnitt (13) zugewandten Endbereich des Gewindebuchsenabschnitts (12) angeordnet ist, und durch eine plastische Deformation der innenradial dem Klemmbogen (9) zugeordneten Gewindegangabschnitte (11a) gegenüber den übrigen Gewindegangabschnitten (11b) der Mutter (6) gebildet ist.

2. Kraftschlüssig selbstsichernde Mutter nach Anspruch 1,
**dadurch gekennzeichnet, dass** der Schlüsselabschnitt (13) nach Art eines Außen- oder eines Innensechskants ausgebildet ist.

3. Kraftschlüssig selbstsichernde Mutter nach Anspruch 1,
**dadurch gekennzeichnet, dass** die plastische Deformation des Klemmbogens (9) in radialer Richtung durch Stauchen erfolgt.

4. Kraftschlüssig selbstsichernde Mutter nach Anspruch 3,
**dadurch gekennzeichnet, dass** der Klemmbogen (9) als offener Bogen (9a) ausgebildet ist und das Stauchen durch eine radiale Krafteinwirkung auf den Endbereich des offenen Bogens (9a) erfolgt.

5. Kraftschlüssig selbstsichernde Mutter nach Anspruch 3,
**dadurch gekennzeichnet, dass** der Klemmbogen (9) als geschlossener Bogen (9b) ausgebildet ist und das Stauchen durch im wesentlichen mittige radiale Krafteinwirkung auf den geschlossenen Bogen (9b) erfolgt.

6. Kraftschlüssig selbstsichernde Mutter nach Anspruch 1,
**dadurch gekennzeichnet, dass** die plastische Deformation des Klemmbogens (9) in axialer Richtung durch Biegen erfolgt.

7. Kraftschlüssig selbstsichernde Mutter nach Anspruch 6,
**dadurch gekennzeichnet, dass** der Klemmbogen (9) als geschlossener Bogen (9c) ausgebildet ist und das Biegen durch im wesentlichen mittige axiale Krafteinwirkung auf den geschlossenen Bogen (9c) erfolgt.

8. Kraftschlüssig selbstsichernde Mutter nach Anspruch 6,
**dadurch gekennzeichnet, dass** der Klemmbogen (9) als offener Bogen (9a) ausgebildet ist und das Biegen durch eine axiale Krafteinwirkung auf den Endbereich des offenen Bogens (9a) erfolgt.

## Claims

1. Frictionally self-locking nut for a threaded joint, in particular for fastening a brake disc on a rail wheel, comprising at least one clamping bend (9) formed by two adjacent, substantially parallel slots (10a, 10b), which bend is radially disposed in the region of the thread (11) of the nut (6),
**characterised in that** said nut (6) consists of a threaded-bushing section (12) with said thread (11), which is coaxially joined by a key section (13) positively cooperating with a tool for rotating said nut (6), with said at least one clamping bend (9) being arranged in the terminal section of said threaded-bushing section (12), which faces said key section (13), and being formed by plastic deformation of the flight sections (11a) associated with said clamping bend (9) radially in the interior, relative to the other flight sections (11 b) of said nut (6).

2. Frictionally self-locking nut according to Claim 1,
**characterised in that** said key section (13) is configured in the manner of a hexagon insert bit or a hexagon socket head element.

3. Frictionally self-locking nut according to Claim 1,
**characterised in that** the plastic deformation of said clamping bend (9) is realised in a radial direction by stauchen.

4. Frictionally self-locking nut according to Claim 3,
**characterised in that** said clamping bend (9) is configured as open bend (9a) and that stauchen is realised by the application of a radial force on the terminal section of said open bend (9a).

5. Frictionally self-locking nut according to Claim 3,
**characterised in that** said clamping bend (9) is configured as closed bend (9b) and that stauchen is realised by application of a substantially central radial force on said closed bend (9b).

6. Frictionally self-locking nut according to Claim 1,
**characterised in that** the plastic deformation of said clamping bend (9) is realised in an axial direction by bending.

7. Frictionally self-locking nut according to Claim 6,
**characterised in that** said clamping bend (9) is configured as closed bend (9c) and that bending is carried out by the application of a substantially central axial force on said closed bend (9c).

8. Frictionally self-locking nut according to Claim 6,
**characterised in that** said clamping bend (9) is configured as open bend (9a) and that bending is carried out by the application of an axial force on the terminal section of said open bend (9a).

## Revendications

1. Ecrou autobloquant de façon rigide pour un assemblage vissé, notamment pour la fixation d'un disque de frein à une roue sur rail, qui a au moins un arceau (9) de serrage formé par deux fentes (10a, 10b) voisines sensiblement parallèles et disposées radialement dans la zone du filet (11) de l'écrou (6),
**caractérisé en ce que** l'écrou (6) est constitué d'un tronçon (12) de douille taraudé ayant le filet (11), auquel se raccorde coaxialement un tronçon (13) de clé coopérant à complémentarité de forme avec un outil pour serrer l'écrou, le au moins un arceau (9) de serrage étant disposé dans la partie d'extrémité du tronçon (12) de douille taraudé, qui est tournée vers le tronçon (13) de clé, et étant formé par une déformation plastique des tronçons (11a) de pas de vis associés à l'arceau (9) de serrage par rapport aux autres tronçons (11b) de pas de vis de l'écrou (6).

2. Ecrou autobloquant de manière rigide suivant la revendication 1,
**caractérisé en ce que** le tronçon (13) de clé est formé à la façon d'un six pans extérieur ou d'un six pans intérieur.

3. Ecrou autobloquant de manière rigide suivant la revendication 1,
**caractérisé en ce que** la déformation plastique de l'arceau (9) de serrage s'effectue par refoulement en direction radiale.

4. Ecrou autobloquant de manière rigide suivant la revendication 3,
**caractérisé en ce que** l'arceau (9) de serrage est constitué en arceau (9a) ouvert et le refoulement s'effectue par application d'une force radiale sur la partie d'extrémité de l'arceau (9a) ouvert.

5. Ecrou autobloquant de manière rigide suivant la revendication 3,
**caractérisé en ce que** l'arceau (9) de serrage est constitué sous la forme d'un arceau (9b) fermé et le refoulement s'effectue par application d'une force radiale sensiblement au milieu sur l'arceau (9b) fermé.

6. Ecrou autobloquant de manière rigide suivant la revendication 1,
**caractérisé en ce que** la déformation plastique de l'arceau (9) de serrage s'effectue par flexion dans la direction axiale.

7. Ecrou autobloquant de manière rigide suivant la revendication 6,
**caractérisé en ce que** l'arceau (9) de serrage est constitué en arceau (9c) fermé et la flexion s'effectue par application d'une force axiale sensiblement au milieu à l'arceau (9c) fermé.

8. Ecrou autobloquant de manière rigide suivant la revendication 6,
**caractérisé en ce que** l'arceau (9) de serrage est constitué en arceau (9a) ouvert et la flexion s'effectue par application d'une force axiale sur la partie d'extrémité de l'arceau (9a) ouvert.
